# DEMANDE DE BREVET EUROPEEN

(11) **EP 0 921 428 A1**
(43) Date de publication de la demande: **09.06.1999**
(21) Numéro de dépôt: 98402976.9
(22) Date de dépôt: 27.11.1998
(51) Int. Cl.: G02B 26/02, G02B 27/28, G02B 5/30

(54) **Système de réduction de surface équivalente laser et de protection optique**

(30) Priorité: 02.12.1997 FR 9715140
(71) Demandeur: THOMSON-CSF, 75008 Paris (FR)
(72) Inventeur: Mazerolle, Denis, 94117 Arcueil Cedex (FR); Puech, Claude, 94117 Arcueil Cedex (FR); Espie, Jean-Luc, 94117 Arcueil Cedex (FR)

(57) **Abrégé**

Ce système de réduction de surface équivalente laser et de protection optique d'un dispositif optique (8), comporte un premier polariseur (1) et une première lame quart d'onde (2) multilongueurs d'ondes placés en série sur le trajet d'un faisceau lumineux multilongueurs d'ondes entre le polariseur et le dispositif optique (8).

Ce système mettant en jeu de la lumière polarisée, l'invention prévoit également de lui associer un obturateur à cristaux liquides permettant la protection contre les agressions optiques.

L'ensemble peut se présenter sous la forme d'une bonnette amovible.

## Description

L'invention concerne un système de réduction de surface équivalente laser et de protection optique notamment contre les agressions de faisceaux lasers.

Dans un système optique pointé, le détecteur (rétine de l'oeil ou capteur d'image électronique, par exemple de type CCD), situé au voisinage d'un plan focal du système, est susceptible de réfléchir la lumière incidente dans la direction d'incidence. Ce phénomène, appelé couramment "effet oeil-de-chat", est particulièrement gênant lorsqu'on souhaite que le système optique reste discret ; en effet, le système peut être facilement détecté et localisé à distance à l'aide d'une simple source divergente associée à un système imageur : une fois localisé, le système peut être attaqué avec une source de forte puissance, ce qui peut se traduire par la destruction de la rétine de l'utilisateur ou du capteur.

Le paramètre utilisé par l'homme de l'art traduisant la capacité d'un système optique à réfléchir la lumière suivant la direction d'incidence est appelé "surface équivalente laser" (SEL). La SEL de l'oeil nul est de l'ordre de 0,1 m², celle de l'oeil associé à une paire de jumelles classique est de quelques centaines de m², celle d'une caméra CCD atteint couramment plusieurs milliers de m², ces dernières valeurs pouvant varier considérablement en fonction de la qualité optique du système.

Si l'on souhaite pointer un objet en restant discret, ce qui est le cas notamment dans le domaine militaire, il est particulièrement important de pouvoir réduire la SEL du système en altérant le moins possible la qualité et la luminosité de l'image fournie par le système.

D'autre part, si le système présente une SEL réduite, le risque de localisation sera plus faible, mais il ne pourra être strictement nul. Il est donc souhaitable que le système permette également une protection contre l'agression laser.

Deux méthodes sont utilisées pour réduire la SEL d'un système optique.

La première consiste à utiliser des filtres optiques centrés sur les longueurs d'onde des lasers usuels. La SEL du système est donc réduite pour ces longueurs d'ondes uniquement ; le système risque donc d'être détecté par une source de longueur d'onde non usuelle ou par une source agile.

La seconde n'est applicable qu'aux systèmes incluant un capteur d'image électronique : elle consiste à déposer sur le capteur une couche limitant la réflexion de la lumière sur la surface du capteur. Cette méthode est d'une efficacité limitée et ne peut s'appliquer aux systèmes à vision directe (jumelles, etc.).

L'invention concerne un système permettant de diminuer d'un facteur important la SEL de tout système optique, par exemple à vision directe ou incluant un capteur d'image ou encore incluant un système d'intensification de lumière.

L'invention concerne donc un système de réduction de surface équivalente laser et de protection optique d'un dispositif optique, caractérisé en ce qu'il comporte un premier polariseur et une première lame quart d'onde multilongueurs d'ondes placés en série sur le trajet d'un faisceau lumineux multilongueurs d'ondes entre le polariseur et le dispositif optique.

Les différents objets et caractéristiques de l'invention apparaîtront plus clairement dans la description qui va suivre et dans les figures annexées qui représentent :
- les figures 1a et 1b, le système de base de l'invention ;
- la figure 2, l'application de l'invention à un système à deux voies de sortie ;
- la figure 3, l'application du système de l'invention à une bonnette réductrice de surface équivalente laser ;
- la figure 4, un système de réduction de SEL et de protection active contre l'agression laser.

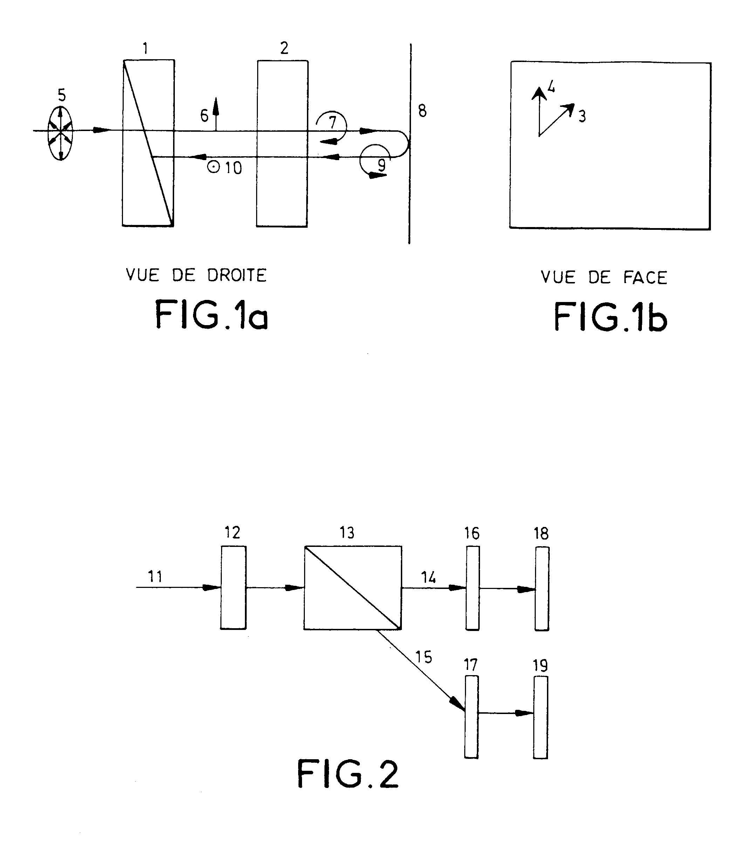

Le système de base de l'invention est représenté en figures 1a, 1b. Il comporte un polariseur linéaire 1 et une lame quart d'onde 2 dont l'axe rapide ou lent 3 fait un angle de 45° avec l'axe 4 du polariseur. Lorsqu'une onde optique de polarisation quelconque 5 traverse le polariseur 1, elle ressort sous forme d'une onde polarisée linéairement 6. Elle traverse ensuite la lame quart d'onde 2 et ressort polarisée circulairement 7. Si cette onde est ensuite réfléchie sur un plan 8 faiblement diffusant, l'onde réfléchie 9 aura également une polarisation circulaire mais le sens de celle-ci sera inversé par rapport à la polarisation de l'onde incidente 7. Par conséquent, lorsque l'onde réfléchie retraversera la lame quart d'onde 2, elle ressortira polarisée linéairement suivant une direction perpendiculaire à l'axe du polariseur 1 et sera absorbée ou rejetée par celui-ci.

Le système doit fonctionner dans une large gamme de longueurs d'ondes. C'est pourquoi, selon l'invention, on prévoit une lame quart d'onde d'une conception particulière. A titre d'exemple, cette lame quart d'onde sera réalisée de la manière proposée dans l'article de H. KIKUTA et al. Applied Optics, Vol 36, n° 7, Mars 1997, pp 1566-1572, à l'aide d'un réseau d'indice sub-longueur d'onde.

Le système ainsi constitué (polariseur et lame quart d'onde) est intégré sur le trajet optique d'un système optique afin d'atténuer la lumière réfléchie sur le détecteur (rétine de l'oeil ou capteur d'image électronique) qui joue le rôle du plan réfléchissant 8. Ces composants peuvent être positionnés soit en amont d'un objectif d'imagerie, soit entre l'objectif et le détecteur, soit entre les lentilles de l'objectif ; dans tous les cas, le polariseur doit être placé en amont de la lame quart d'onde. Une solution intéressante consiste à placer ces deux composants en amont de l'objectif sous forme d'une bonnette que l'on ajoute lorsque l'on souhaite diminuer la SEL du système.

Selon une variante de l'invention, le polariseur 1 et la lame quart d'onde sont réalisés à l'aide d'un polariseur circulaire comportant un matériau chiral tel qu'un cristal liquide nématique ou cholestérique dont l'arrangement en hélice ne permet de ne transmettre que la composante circulaire droite ou gauche.

Le polariseur peut être constitué d'une lame polarisante de type dichroïque (Polaroïd par exemple) qui absorbe la composante perpendiculaire de la lumière ou d'un séparateur de polarisation (cube séparateur, prisme de Thompson, etc).

La figure 2 représente le cas d'un séparateur de polarisation fournissant deux voies de sortie. La lumière 11 entre d'abord dans l'objectif 12 puis est divisée en deux faisceaux 14, 15 à l'aide d'un séparateur de polarisation linéaire 13. Chacun des faisceaux traverse une lame quart d'onde 16, 17 orientée à 45° par rapport à la direction de polarisation du faisceau avant d'arriver sur le détecteur 18, 19. Si le séparateur est de type séparateur de polarisation circulaire (par exemple une lame à cristaux liquides cholestériques), la réduction de SEL est obtenue intrinsèquement sans ajout de composant.

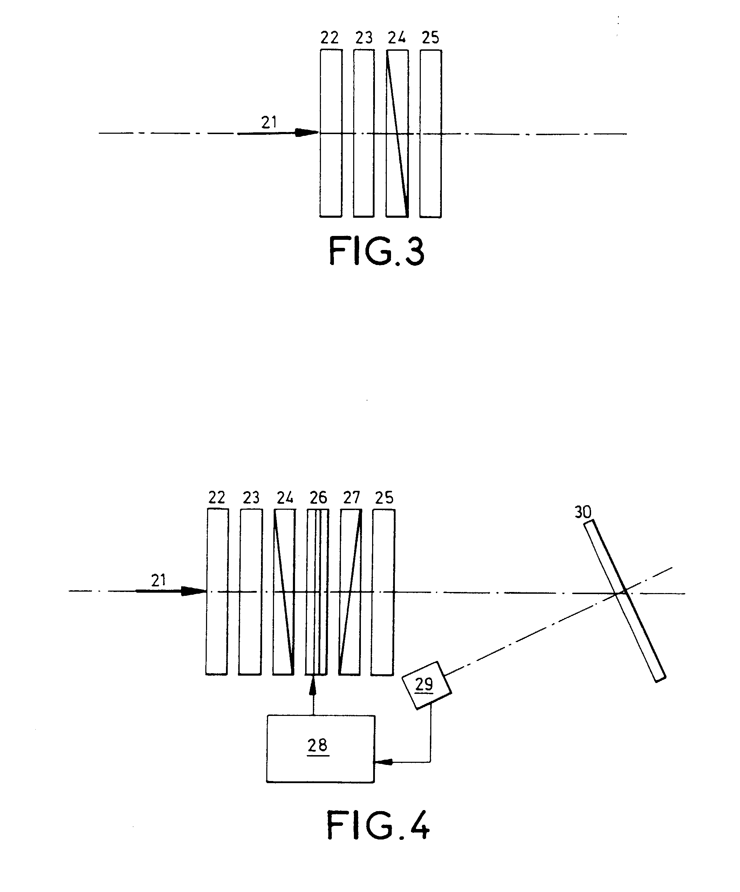

La scène observée peut comporter des zones émettant une lumière fortement polarisée, par exemple la surface de l'eau éclairée sous une incidence proche de l'indice de Brewster. C'est pourquoi, comme représenté en figure 3, afin d'éviter que ces zones ne voient leur luminosité amplifiée ou atténuée par le polariseur, on dépolarise la lumière en plaçant en amont du polariseur 24 et de la lame quart d'onde 25. Une autre lame quart d'onde 23 dont l'axe rapide ou lent fait un angle de 45° avec l'axe du polariseur 24. Ainsi, si la lumière incidente est polarisée linéairement, par exemple perpendiculaire au polariseur d'entrée, elle ressortira avec une polarisation circulaire de la lame quart d'onde 23 et seule une moitié de son intensité sera absorbée par le polariseur (au lieu de la quasi-totalité de son intensité dans le cas où la lumière est directement incidente sur le polariseur).

Les différents composants du système isolateur doivent être capables non seulement de présenter une admittance angulaire suffisante mais aussi de fonctionner dans un domaine spectral qui peut être relativement large, par exemple l'ensemble du spectre visible. En ce qui concerne le polariseur, la technologie de type Polaroïd permet par exemple un fonctionnement sur tout le spectre visible avec un angle d'admittance de l'ordre de ± 20°. En ce qui concerne la lame quart d'onde, la technologie d'empilage de feuilles de polymère biréfringent permet des performances similaires.

Afin d'éviter que la SEL ne reste importante dans une bande spectrale autre que la bande utile, nous proposons également d'insérer dans le système un filtre 22 ne laissant passer que la bande utile.

Selon l'invention, le système de la figure 3 est réalisé sous forme d'une bonnette comportant le filtre, la lame quart d'onde 23, le polariseur 24 et la lame quart d'onde 25. Une telle bonnette peut être monté sur une optique telle qu'un objectif.

Le faisceau de lumière incident 21 traverse en succession les quatre composants de la bonnette. Le filtre passe-bande peut être placé également en aval des autres composants ou encore intercalé entre deux composants.

On peut envisager qu'un système optique d'observation ou de pointage soit équipé d'une telle bonnette amovible. En situation normale, la bonnette n'est pas utilisée, ce qui permet de ne pas atténuer le flux lumineux arrivant sur le détecteur ; en cas de nécessité, si l'on souhaite continuer l'observation ou le pointage le plus discrètement possible, on interpose la bonnette sur le trajet optique, par exemple en amont de l'objectif. On diminue ainsi considérablement la SEL du système en n'atténuant que d'un facteur 2 environ le flux lumineux arrivant sur le détecteur.

La figure 4 représente un système pouvant fonctionner de manière active. Il comporte en aval du polariseur 24 un système actif de protection contre l'agression laser : ce système actif peut être obturateur électrooptique 26, par exemple une cellule à cristaux liquides photo-activée (ou activée électriquement dès que l'intensité lumineuse détectée dépasse un certain seuil) placée entre deux polariseurs 24 et 27, l'un des polariseurs pouvant être le polariseur 24 du système de projection. Ainsi, pour une illumination normale, la quasi-totalité de la lumière est récupérée , et pour une forte illumination le cristal liquide commute et fait tourner la polarisation de telle sorte que la lumière est absorbée par le deuxième polariseur 27. La cellule à cristal cristaux liquides peut être par exemple de type nématique ou ferroélectrique et peut comporter une couche de matériau photosensible (par exemple en silicium amorphe) afin d'être directement photo-activée.

Le polariseur 27 est orienté perpendiculairement au polariseur 24. L'ensemble polariseur 24, cellule à cristal liquide 25, polariseur 27 constituent une cellule dont l'épaisseur est ajusté de façon à se comporter comme une lame quart d'onde. Hors tension, les molécules de cristal liquide sont orientées à 45° par rapport aux axes des polariseurs, la lumière n'est donc pas absorbée par le polariseur 24 ; en présence d'une tension, les molécules sont orientées suivant l'axe de l'un des polariseurs, la lumière est donc absorbée par le polariseur 24, ce qui permet la protection contre l'agression.

Ce système est commandé par une électronique 28 placée en sortie d'un détecteur 29 récupérant une partie de la lumière incidente par l'intermédiaire d'une lame faiblement réfléchissante 30. Dès que l'intensité lumineuse détectée dépasse un certain seuil, une tension est renvoyée sur la cellule à cristal liquide 26 afin de la commuter dans l'état non passant.

Un autre exemple de mise en oeuvre de l'invention consiste à appliquer le système de la figure 2 au système décrit dans la demande de brevet français n° 93 04518 déposée par la demanderesse intitulée "Système optique d'observation binoculaire". Dans le cas où le "séparateur" mentionné dans cette demande de brevet est du type séparateur de polarisation linéaire, on peut insérer, comme indiqué sur la figure 2, une lame quart d'onde sur chaque faisceau de sortie (correspondant) à chacune des voies oculaires, pour réduire la SEL du système. Si le séparateur est de type séparateur de polarisation circulaire (par exemple une lame à cristaux liquides cholestériques), la réduction de SEL est obtenue intrinsèquement sans ajout de composant.

De même que dans l'exemple précédent, on peut placer sur chacun des deux faisceaux polarisés un obturateur à cristaux liquides permettant de protéger l'utilisateur contre l'agression laser.

## Revendications

1. Système de réduction de surface équivalente laser et de protection optique d'un dispositif optique (8), caractérisé en ce qu'il comporte un premier polariseur (1, 13, 24, 27) et une première lame quart d'onde (2, 16, 17, 25) multilongueurs d'ondes placés en série sur le trajet d'un faisceau lumineux multilongueurs d'ondes entre le polariseur et le dispositif optique (8).

2. Système selon la revendication 1, caractérisé en ce que le polariseur (13) comporte un séparateur de polarisations fournissant selon deux directions différentes, deux faisceaux de polarisations orthogonales et que le système comporte sur chaque direction une lame quart d'onde (16, 17).

3. Système selon l'une des revendications 1 ou 2, caractérisé en ce qu'il comporte un réseau de diffraction.

4. Système selon la revendication 1, caractérisé en ce qu'il comporte une deuxième lame quart d'onde (23) placée du côté opposé à la première lame quart d'onde (25) par rapport au polariseur et dont l'axe rapide ou lent fait un angle de 45° avec l'axe du polariseur (24).

5. Système selon l'une des revendications 1 ou 4, caractérisé en ce qu'il comporte un filtre passe-bande (22).

6. Système selon l'une des revendications 4 ou 5, caractérisé en ce que les différents composants sont empilés et regroupés sous forme d'une bonnette montable sur une optique.

7. Système selon la revendication 1, caractérisé en ce qu'il comporte une cellule à cristal liquide (26) enserrée entre le premier polariseur (24) et un deuxième polariseur (27) orienté perpendiculairement au premier polariseur, la cellule à cristal liquide étant commandable électriquement de façon de que, sur commande, les molécules de cristal liquide soient orientées parallèlement aux axes des polariseurs ou à 45° de ces axes.

8. Système selon la revendication 7, caractérisé en ce qu'il comporte une lame semi-réfléchissante placée sur le trajet du faisceau et déviant une partie du faisceau lumineux vers un système de photodétection qui commande la cellule à cristal liquide en fonction de l'intensité lumineuse qu'il détecte.

9. Système selon la revendication 1, caractérisé en ce que le polariseur (1) et la lame quart d'onde (2) sont réalisés à l'aide d'un polariseur circulaire constitué d'un matériau chiral présentant un arrangement en hélice.
